Europäisches Patentamt

European Patent Office

Office européen des brevets

(19)

(11) Veröffentlichungsnummer : **0 101 695 B2**

(12) **NEUE EUROPÄISCHE PATENTSCHRIFT**

(45) Veröffentlichungstag der neuen Patentschrift:
02.10.91 Patentblatt 91/40

(51) Int. Cl.$^5$ : **B65D 41/26**

(21) Anmeldenummer : 83900635.0

(22) Anmeldetag : 21.02.83

(86) Internationale Anmeldenummer :
PCT/EP83/00042

(87) Internationale Veröffentlichungsnummer :
WO 83/03085 15.09.83 Gazette 83/21

(54) **DOSIERSCHRAUBVERSCHLUSS.**

(30) Priorität : 01.03.82 DE 3207223

(43) Veröffentlichungstag der Anmeldung :
07.03.84 Patentblatt 84/10

(45) Bekanntmachung des Hinweises auf die
Patenterteilung :
09.04.86 Patentblatt 86/15

(45) Bekanntmachung des Hinweises auf die
Entscheidung über den Einspruch :
02.10.91 Patentblatt 91/40

(84) Benannte Vertragsstaaten :
AT BE CH DE FR GB LI LU NL SE

(56) Entgegenhaltungen :
EP-A- 0 083 506
BE-A- 545 477
DE-A- 2 647 393

(56) Entgegenhaltungen :
FR-A- 1 029 979
FR-A- 1 081 223
FR-A- 2 142 720
GB-A- 766 165
JP-U- 5 422 525
US-A- 2 061 685
US-A- 2 813 650
Verpackungs-Rundschreiben 6 (1966) Seiten
788-794.

(73) Patentinhaber : Henkel
Kommanditgesellschaft auf Aktien
Postfach 1100 Henkelstrasse 67
W-4000 Düsseldorf-Holthausen (DE)

(72) Erfinder : BÜCHELER, Herbert
Erlenweg 26
W-4006 Erkrath (DE)
Erfinder : WELTGEN, Paul Otto
Tucherweg 11
W-4010 Hilden (DE)

## Beschreibung

Die Erfindung betrifft einen Dosierschraubverschluß für eine Behälteröffnung, insbesondere für einen Flaschenhals, mit innen liegendem, vorzugsweise eine Stirndichtung aufweisendem Schraubgewinde sowie becherförmigem, in der Schießstellung oberhalb der Behälteröffnung befindlichem Dosierzylinder, sierzylinder an seinem offenen Ende um einen in der Schießstellung in die Behälteröffnung hineinragenden Produktablaufring verlängert ist, wobei das Gewinde als umlaufender Ring außen an dem Zylinder angesetzt und angeformt, vorzugsweise angespritzt ist.

Zum Dosieren von flüssigen Reinigungs- und Avivagemitteln und dergleichen werden Schraubverschlüsse mit innen liegendem Gewinde mit Stirn- oder Konusdichtung verwandt. Bei der Anwendung solcher Verschlüsse auf hochviskose Produkte können größere Produktreste im Dosier- bzw. Meßraum verbleiben und nach Gebrauch die Behälteröffnung sowie den umliegenden Bereich, z. B. die Flaschenschulter, benetzen. Mit dem Dosiervolumen steigt in der Regel die in Achsrichtung gemessene Länge des Verschlusses und damit die Länge des in der Regel dichtend am Boden des Dosierzylinders anliegenden, materialintensiven Behälter bzw. Flaschenhalses.

Zum Verkürzen des Flaschenhalses wurden schon Dosierverschlüsse mit in den Flaschenhals hineinragendem Dosierraum geschaffen. Flasche und Verschluß mußten dann aber gut zentriert werden, wenn das Aufsetzen keine Probleme bereiten sollte. Ein weiterer Nachteil bestand darin, daß das Dosierteil - speziell bei vollem Gebinde - vom Produkt benetzt und damit eine Anwendung ohne die Gefahr eines ungewollten Tropfens erschwert wurde.

Es ist weiterhin ein Verschluß bekannt aus FR-A-1 081 223, welcher in Form eines Stopfens ausgebildet ist, wobei der Querschnitt des freien Endes des Innenteiles gegenüber dem Querschnitt des angrenzenden Innenraumes verengt ist, und wobei das freie Ende des Innenteils schräg nach innen ausläuft. Dieser Verschluß ist vorgesehen für Flaschen mit unter Innendruck stehenden Flüssigkeiten wie Sekt, Bier, Mineralwasser usw. Hierbei stellt sich nicht das Problem der Dosierung von mehr oder weniger viskosen Flüssigkeiten, welche die Umgebung des Ausgießstutzens des Behälters verschmutzen können. Es handelt sich deshalb um eine gattungsverschiedene Verschlußkonstruktion.

Weiterhin ist aus der älteren Anmeldung EP-A-83 506 (Artikel 54 (3)) ein Verschluß bekannt, wobei ein Dosiervolumen angeformt ist. Dabei ist allerdings nicht das Problem gelöst wie die Verschmutzung des Bereiches des Ausgießstutzens nach der Entnahme einer Produktdosis etwa von einem viskosen Reinigungsmittel verhindert werden kann.

Aus US-A- 2 061 685 ist ein Verschluß gemäß dem obergriff des Auspruchs bekannt. Auch hierbei ist das Problem des Abtropfens von Produktresten nach einer Entnahme zwecks Verhinderung von Verschmutzungen nicht erwähnt.

Der Erfindung liegt deshalb die Aufgabe zugrunde, einen Dosierverschluß zu schaffen, bei dessen Anwendung ein ungewolltes Benetzen von Behälterhals bzw. -schulter oder des Dosierteils bei normaler Anwendung nicht eintritt und bei dem das Verschließen, insbesondere auch betreffend das Zentrieren, problemlos auszuführen ist, ohne daß ein materialintensiver langer Flaschenhals erforderlich wäre.

Die erfindungsgemäße Lösung besteht in bezug auf den Verschluß gemäß US-A-2061685 darin, daß der Produktablaufring (6) einen ersten zylindrischen Bereich, der ein Dichtelement in der Behälteröffnung (3) bildet und klemmend an deren Innenfläche anliegt, und daran anschließend einen schräg nach innen einspringenden Bereich (10) aufweist, der an seinem freien Ende einen gegenüber dem Querschnitt des zylindrischen Bereichs verengt en Innenquerschnitt aufweist und daß das freie Ende des Produktablaufringes (6) schräg nach innen mit scharfer Kante (11) ausläuft.

Demgemäß wird durch die Erfindung erreicht, daß der Dosierraum über dem Behälter- bzw. Flaschenhals und der Dichtfläche anzuordnen ist und trotzdem, bedingt durch den in den Flaschenhals hineinragenden Produktablaufring, Produktreste nach Anwendung immer in das Flascheninnere und nicht etwa auf dem Flaschenhals oder das Schraubgewinde von Verschluß und/oder Behälter ablaufen. In dem in den Flaschenhals hineinragenden Bereich wird der Produktablaufring bei entsprechender Dimensionierung zugleich als nach innen federnd klemmendes Dichtelement ausgebildet, so daß das jeweilige Produkt auch bei umkippendem Behälter nennenswerte Bereiche der Außenseite des Produktablaufrings nicht benetzen und schon gar nicht bis zur Dichtfläche bzw. die Gewinde vordringen kann. Weder die Außenfläche des Dosierzylinders noch die Oewindebereiche werden daher mit dem Produkt benetzt.

Schließlich ist auch der Querschnitt des freien Endes des Produktablaufrings gegenüber dem angrenzenden Innenraum des Rings bzw. Dosierraums verengt. Dabei läuft das freie Ende des Produktablaufrings schräg nach innen mit scharfer Kante aus. Ein solcher sich nach innen verjüngender Dicht- bzw. und Zentrierbereich am Dosierzylinder bzw. daran angeformten Produktablaufring besitzt eine Mehrfachfunktion. Zunächst einmal ist das Einspringen nach innen günstig zum Zentrieren des Verschlusses beim Einstecken und Ausfschrauben. Weiterhin ist der sich an den einspringenden Bereich anschließende Teil des Produktablaufrings als gegen die Innenwand der Behältermündung federnd gepreßtes Dichtmittel ausgebildet. Schließlich bietet eine nach innen vorspringende relativ scharfe Kante des Produktablaufrings beim Ausgießen von Produkt aus dem Dosierraum die vorteilhafte Möglichkeit eines resttropfenfreien Ausgießens ohne Produktabriß. Die fragliche Querschnittsverengung wirkt nämlich beim Ausgießen der jeweiligen Flüssigkeit wie ein Pralleffekt.

Anhand der schematischen Darstellung eines Ausführungsbeispiels werden weitere Einzelheiten der Erfindung erläutert.

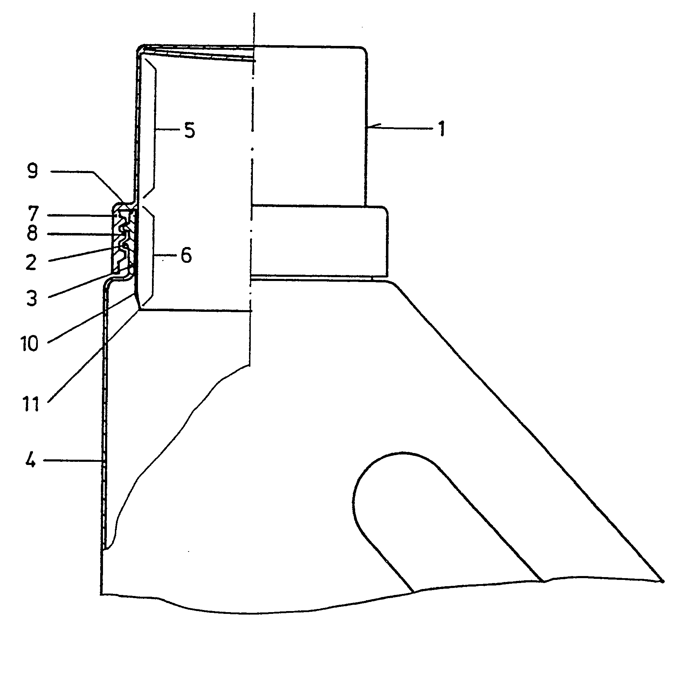

In der Zeichnung wird ein insgesamt mit 1 bezeichneter Dosierverschluß - teilweise im Schnitt - aufgeschraubt auf den mit einem Gewinde 1 versehenen Flaschenhals 3 eines Behälters 4 schematisch dargestellt. Der Dosierverschluß 1 besteht aus dem zylindrischen Dosierraum 5, dem daran anschließenden Produktablaufring 6 und dem außen angeformten Gewindering 7. Letzterer wird vorzugsweise in etwa im Grenzbereich zwischen Dosierraum 5 und Produktablaufring 6 an den Dosierzylinder angespritzt. Der Gewindering 7 besitzt auf der Innenseite ein dem Schraubgewinde 2 entsprechendes Gewinde 8 und am Kopf eine dem freien Ende des Flaschenhalses 3 zugeordnete Dichtfläche 9.

Von besonderer Bedeutung ist der als zylindrische Fortsetzung an den Dosierraum 5 angeformte Produktablaufring 6. Die Maße werden dabei so gewählt, daß die Außenfläche des Produktablaufrings 6 beim Einschieben in den Flaschenhals 3 klemmend an der Innenfläche des letzteren anliegt. Dadurch wird eine Dichtwirkung erzielt, die ein Benetzen der Außenseite des Dosierzylinders, der Dichtfläche 9 und der Gewinde 2 bzw. 8 durch aus dem Innern des Behälters 4 kommendes Produkt praktisch ausschließt. Eine wesentliche Aufgabe des Produktablaufrings 6 besteht darin, nach dem Aufsetzen des Verschlusses 1 auf einen Behälter 4 noch im Dosierraum 5 haftendes Produkt ohne Benetzung der Verschlußteile in den Behälter ablaufen zu lassen.

Dadurch, daß der Produktablaufring 6 im Bereich (10) seines freien Endes einen sich nach innen verenenden Querschnitt besitzt 9 und das freie Ende des Produktablaufrings 6 schräg nach innen mit scharfer Kante 11 ausläuft, werden das Zentrieren des Verschlusses beim Aufschrauben vereinfacht und ein fast resttropfenfreies Ausgießen von Produkt aus dem Dosierraum 5 ermöglicht.

**Bezugzeichenliste**

1 = Dosierverschluß
2 = Schraubgewinde
3 = Flaschenhals
4 = Behälter
5 = Dosierraum
6 = Produktablaufring
7 = Gewindering
8 = Gewinde
9 = Dichtfläche
10 = freies Ende von 6
11 = scharfe Kante

**Patentansprüche**

1. Dosierschraubverschluß für eine Behälteröffnung, insbesondere für einen Flaschenhals, mit innenliegendem, vorzugsweise eine Stirndichtung (9) aufweisendem Schraubgewinde (8) sowie becherförmigem, in der Schließstellung oberhalb der Behälteröffnung (3) befindlichem Dosierzylinder (5), der an seinem offenen Ende um einen in der Schließstellung in die Behälteröffnung (3) hineinragenden Produktablaufring (6) verlängert ist, wobei das Gewinde (8) als umlaufender Ring (7) außen an dem Zylinder (5,6) angesetzt und angeformt, vorzugsweise angespritzt ist, dadurch gekennzeichnet, daß der Produktablaufring (6) einen ersten zylindrischen Bereich, der ein Dichtelement in der Behälteröffnung (3) bildet und klemmend an deren Innenfläche anliegt, und daran anschließend einen schräg nach innen einspringenden Bereich (10) aufweist, der an seinem freien Ende einen gegenüber dem Querschnitt des zylindrischen Bereichs verengt en Innenquerschnitt aufweist und daß das freie Ende des Produktablaufringes (6) schräg nach innen mit scharfer Kante (11) ausläuft.

**Claims**

1. Metering screw closure for a container opening, in particular for a bottle neck, with inwardly lying screw thread (8) preferably displaying a front seal (9) as well as with beaker-shaped metering cylinder (5) which is disposed above the container opening (3) in the closed setting and which is prolonged at its open end by a product outlet ring (6) projecting into the container opening (3) in the closed setting, wherein the thread (8) is placed and moulded as encircling ring (7) externally on the cylinder (5, 6), preferably injection-moulded on, characterised thereby, that the product outlet ring (6) displays a first cylindrical region, which forms a sealing element in the container opening (3) and lies wedgingly against its inward surface, and adjoining thereat an obliquely inwardly receding region (10), which at its free end displays an inner cross-section narrowed relative to the cross-section of the cylindrical region and that the free end of the product outlet ring (6) runs out obliquely inwards with sharp edge (11).

**Revendications**

1. Fermeture à vis formant doseur pour une ouverture de récipient, en particulier pour un goulot de bouteille, avec filetage (8) situé intérieurement, présentant de préférence un joint frontal (9), ainsi qu'avec un cylindre doseur (5) en forme de godet situé au-dessus de l'ouverture (3) du récipient et qui est prolongé, à son extrémité ouverte, par un anneau d'écoulement de produit (6) pénétrant dans l'ouverture (3) du récipient dans la position de fermeture, le filetage (8) étant adjoint, de préférence par injection, extérieurement au cylindre (5, 6) et formant corps avec celui-ci, en tant qu'anneau circonférentiel (7), caractérisé par le fait que l'anneau d'écoulement de produit (6) présente, à son début, une zone cylindrique (10) qui forme un élément d'étanchéité dans l'ouverture (3) du récipient et s'applique avec serrage contre la surface intérieure de celle-ci et qui présente en suivant une partie oblique rentrant vers l'intérieur à son extrémité libre, laquelle extrémité libre est rétrécie par rapport à la section intérieure de cette zone cylindrique de l'anneau d'écoulement de produit (6) et se termine, obliquement vers l'intérieur, par une arête vive (11).